# EUROPÄISCHE PATENTSCHRIFT

(11) **EP 3 326 939 B1**
(45) Veröffentlichungstag und Bekanntmachung des Hinweises auf die Patenterteilung: **30.12.2020**
(21) Anmeldenummer: 17203575.0
(22) Anmeldetag: 24.11.2017
(51) Int. Cl.: B65G 47/244, B65G 47/82

(54) **VORRICHTUNG ZUM DREHEN VON AUF EINEM FÖRDERER AUFSTEHENDEN BEHÄLTERN**
DEVICE FOR ROTATING CONTAINERS ON A CONVEYOR
DISPOSITIF PERMETTANT DE TOURNER DES RÉCIPIENTS AGENCÉS VERTICALEMENT SUR UN CONVOYEUR

(30) Priorität: 25.11.2016 DE 102016122795
(43) Veröffentlichungstag der Anmeldung: 30.05.2018
(73) Patentinhaber: Jörg von Seggern Maschinenbau GmbH, 26133 Oldenburg (DE)
(72) Erfinder: von Seggern, Jörg, 26133 Oldenburg (DE)
(74) Vertreter: Jabbusch, Matthias

(56) Entgegenhaltungen:
- DE-A1-102007 009 240
- GB-A- 2 077 209
- US-A- 3 834 516

## Beschreibung

Die Erfindung betrifft eine Vorrichtung zum Drehen von auf einem Förderer aufstehenden Behältern um eine vertikale Achse, umfassend an zumindest einen Behälter anlegbare Anlageelemente.

Behälter, wie offene Schalen, werden auf Förderern transportiert, um sie mit Gegenständen oder Stoffen zu füllen und anschließend zu verschließen. Die Behälter werden dabei, beispielsweise mit Abstaplern einem Vorrat entnommen und auf den Förderer aufgestellt. Als Förderer dienen beispielsweise Förderbänder.

Von einem z. B. Abstapler werden die Behälter in einer bestimmten Ausrichtung auf den Förderer aufgestellt. Im Verlaufe des Befüll- und Verschließprozesses kann es notwendig sein, die Aufstellung der Behälter auf dem Förderer zu verändern. Dabei kann insbesondere ein Drehen der Behälter auftreten, nämlich ein Drehen um ihre vertikale Längsmittelachse. Dies insbesondere bei Behältern mit einer rechteckigen Grundfläche, die also längere Seitenränder und kürzere Seitenränder aufweisen.

Aus dem Stand der Technik sind verschiedene gattungsgemäße Vorrichtungen bekannt, bei denen Anlageelemente an Behälter angelegt werden, um diese zu drehen. Es kann sich dabei beispielsweise um Führungselemente mit Profilen oder Drehteller handeln. So zeigt die GB 2 077 209 A einen Flaschendreher mit einem Drehkreuz mit radial vorstehenden Fingern. Die Flaschen stehen dabei in einer Ebene auf einem Förderband auf.

Der Erfindung liegt die Aufgabe zugrunde, eine Vorrichtung der eingangs genannten Gattung aufzuzeigen, mit der in einfacher baulicher Weise ein Drehen der Behälter ermöglicht ist, wobei die Vorrichtung eine lange Standzeit aufweist und gut zu reinigen ist.

Diese Aufgabe ist erfindungsgemäß durch die Merkmale des Anspruchs 1 gelöst.

Die erfindungsgemäße Vorrichtung ist durch ein offenes Speichenrad gekennzeichnet. Dieses ist dem Förderer so zugeordnet, dass die Arme des Speichenrades an den Behälter anlegbare Anlageelemente ausbilden. Die Anordnung des Speichenrades erfolgt vorzugsweise unmittelbar neben dem Förderer, in der Weise, dass seine Arme über den Förderer hinwegstreichen können.

Die erfindungsgemäße Vorrichtung hat eine Drehaufnahme, jedoch keinen Drehantrieb. Es handelt sich um ein antriebsloses offenes Speichenrad, dessen Drehung durch ein Anstoßen der geförderten Behälter an den Armen des offenen Speichenrades ausgelöst wird. Ein geförderter Behälter trifft auf einen Arm des Speichenrades und bewegt diesen. Diese Bewegung wird in eine Drehung umgesetzt, die bewirkt, dass andere Arme des Speichenrades auch in eine Drehung gesetzt werden. Ein zweiter Arm des Speichenrades legt sich an den Behälter an und beginnt diesen aus seiner bisherigen translatorischen Bewegung in eine Drehbewegung zu bringen.

Dieses Umsetzen der translatorischen Bewegung in eine Drehbewegung wird durch die erfindungsgemäße Drehaufnahme erleichtert. Diese Drehaufnahme weist nämlich ein die Höhenlage des Speichenrades bei Drehung des Speichenrades vergrößernde, erhöhende Eigenschaft auf. Bei einer Drehung des Speichenrades wird die Höhenlage des Speichenrades erhöht, dies aber nur für einen Abschnitt. Dieser Abschnitt der Erhöhung der Höhenlage des Speichenrades reicht aber aus, einen an den Armen des Speichenrades anliegenden Behälter teilweise ein Stück weit von dem Förderer abzuheben und in dieser teilangehobenen Position zu verdrehen. Dieses Verdrehen auf dem Förderer ist durch das teilweise Anheben des Behälters erleichtert. Das Abheben des Behälters erfolgt nur in dem Bereich, in dem die zwei Arme des Speichenrades am Behälter anliegen. Eine gegenüberliegende Ecke eines Behälters wird nicht angehoben, sie liegt weiter auf dem Förderer auf und erfährt daher weiter den Förderungsimpuls des Förderers. Das wird insgesamt in eine Drehung des Behälters umgesetzt, beispielsweise in eine Drehung um 90°.

Nach der abschnittsweisen Erhöhung der Drehaufnahme wird diese Erhöhung wieder in den Ausgangspunkt zurückgeführt, damit das offene Speichenrad für einen nachfolgenden Behälter wieder zu dessen Drehung bereit ist.

Die erfindungsgemäße Vorrichtung ist einfach ausgebildet. Sie besteht aus einem Speichenrad, das gut zu reinigen ist. Es kann zu Reinigungszwecken auch von der Drehaufnahme abgenommen werden. Ein elektrischer oder sonstiger Antrieb ist nicht vorgesehen, so dass durchaus mit dem Hochdruckreiniger gearbeitet werden kann.

Zur Ausbildung der die Höhenlage bei einer Drehung abschnittsweise erhöhenden Drehaufnahme sieht die Erfindung vor, dass die Drehaufnahme Rampenabschnitte hat und dass das Speichenrad in seinem Nabenbereich auf die Rampenabschnitte aufstellbare Rollelemente aufweist. Es sind mehrere Rampenabschnitte vorgesehen, um jeweils bei umlaufender Drehung des Speichenrades um 360° mehrere Erhöhungen der Höhenlage des Speichenrades zu ermöglichen und nachfolgende Absenkungen der Höhenlage des Speichenrades zu ermöglichen. So können bei fortgesetzter Drehung nacheinander mehrere Behälter jeweils ein Stück vom Förderer angehoben und gedreht werden. Die vorgesehenen Rollelemente, insbesondere Räder, verringern dabei Reibungseffekte.

Nach einer ersten Weiterbildung der Erfindung ist vorgesehen, dass einander benachbarte Speichen des Speichenrades rechtwinklig zueinander ausgerichtet sind. Das Speichenrad hat nach dieser Weiterbildung vier Speichen, die in Kreuzform zueinander angeordnet sind. Die Speichen können dabei eine jeweils die Behälterkantenlänge überragende Baulänge aufweisen, so dass insbesondere ein Behälterrand über seine gesamte Kantenlänge auf der Speiche aufliegen kann.

Konstruktiv ist vorgesehen, dass die Drehaufnahme einen Teller hat, in den die Rampen eingearbeitet sind. Es kann sich hier um ein Metallbauteil handeln, in das die Rampen durch Fräsung eingearbeitet sind. Möglich ist aber auch die Verwendung von Kunststoffen.

Der Teller wird dem Förderer zugeordnet, beispielsweise ist er mit Gestellelementen an Bauteilen des Förderers gehalten. Damit ist eine lagesichere Zuordnung des Speichenrades zum Förderer gegeben.

Zur weiteren Ausbildung der Erfindung ist noch vorgesehen, dass an den Speichen des Speichenrades entlang der jeweiligen Speichenränder nach oben vorstehende Lippen angeordnet sind. Diese bilden Auflageelemente für vorkragende Ränder an den Behältern, insbesondere an Schalen. Die Lippen können in das Material der Speichen eingearbeitet sein, sie können aber auch aus einem elastischen Material gefertigt sein und auf den Speichen angebracht sein.

Ein Ausführungsbeispiel der Erfindung, aus dem sich weitere erfinderische Merkmale ergeben, ist in der Zeichnung dargestellt. Es zeigen:
- Figuren 1 bis 5:: perspektivische Ansichten eines Förderers für Schalen mit einer erfindungsgemäßen Vorrichtung zum Drehen der Schalen und
- Figuren 6 bis 8:: teilgeschnittene, maßstabsvergrößerte Seitenansichten der Vorrichtung zum Drehen der Schalen nach Figuren 1 bis 5.

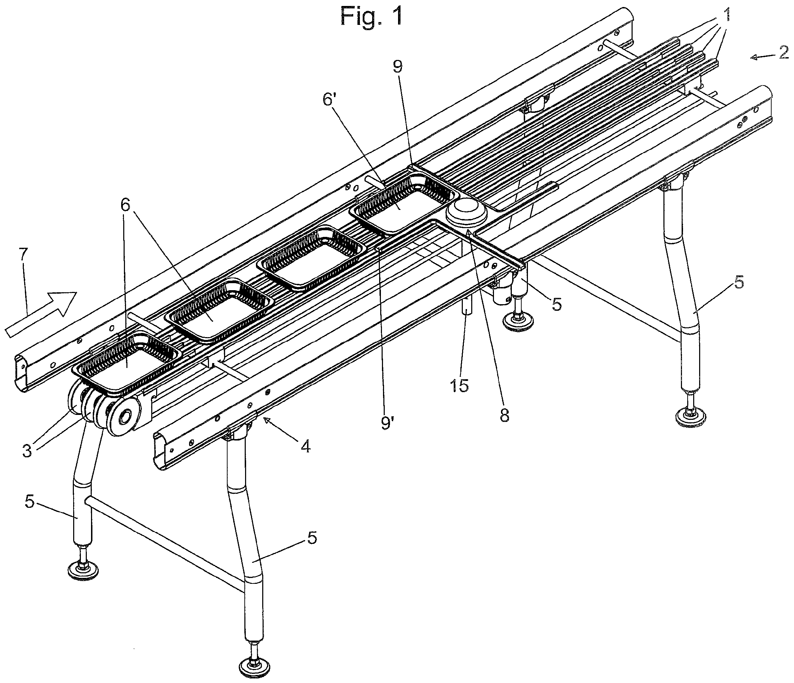

Der Förderer in Figur 1 ist ein aus mehreren Riemen 1 gebildetes Förderband 2. Die Riemen 1 laufen um Rollen 3, diese sind dabei an einem Maschinengestell 4 gehalten. Das Maschinengestell 4 steht über Füße 5 auf einem nicht weiter dargestellten Boden auf.

Auf das Förderband 2 sind Schalen 6 aufgestellt, die mit dem Förderband 2 entlang Pfeil 7 gefördert werden. Die in Figur 1 in Förderrichtung erste Schale 6' stößt während dieser Förderung auf ein Speichenrad 8 der erfindungsgemäßen Vorrichtung zum Drehen von Behältern. Eine Speiche 9 steht quer über das Förderband 2 vor, so dass die Schale 6' gegen diese Speiche 9 stößt.

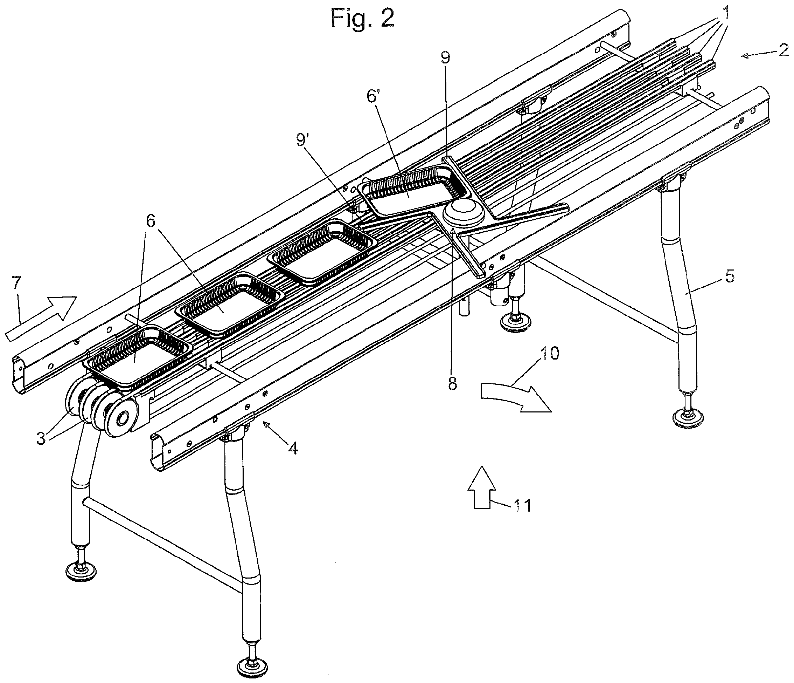

Figur 2 zeigt, dass die weitere Förderung entlang Pfeil 7 dazu führt, dass mit der Schale 6' das Speichenrad 8 in eine Horizontaldrehung entlang Pfeil 10 versetzt wird. Die Drehung des Speichenrades 8 bewirkt, dass nicht nur die Speiche 9 gedreht wird, sondern auch eine zur Speiche 9 rechtwinklig ausgebildete benachbarte Speiche 9'. Diese legt sich an einen anderen Seitenrand der Schale 6' an. Die Schale 6' ist somit zwischen beiden Speichen 9 und 9' aufgenommen.

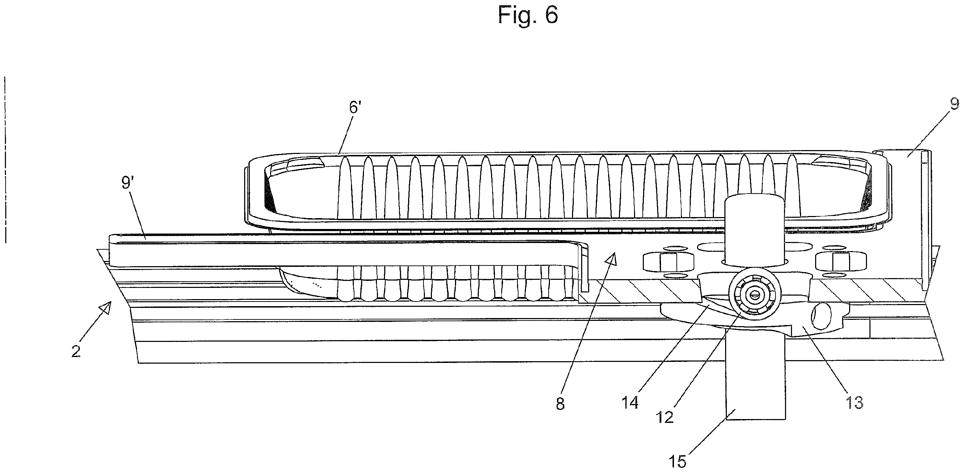

Bei der Drehung des Speichenrades 8 erfolgt zugleich eine Anhebung des Speichenrades 8 entlang Pfeil 11. Dazu ist das Speichenrad 8 in einer Drehaufnahme angeordnet, die in Figuren 6 ff. näher beschrieben ist.

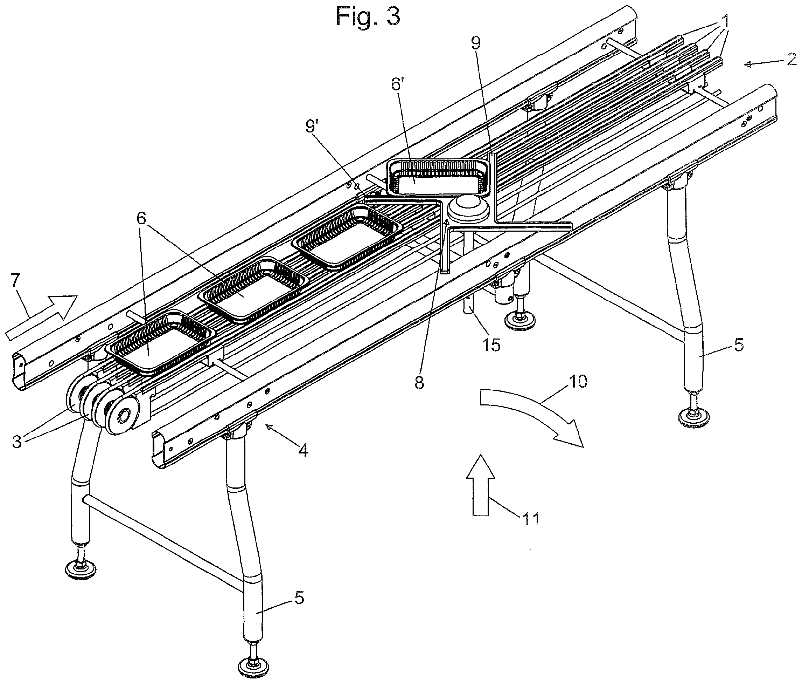

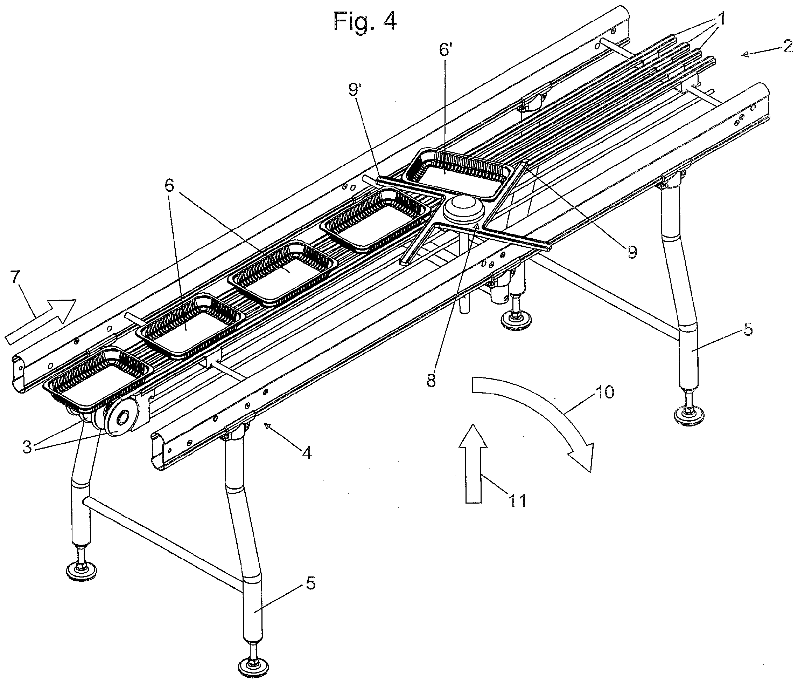

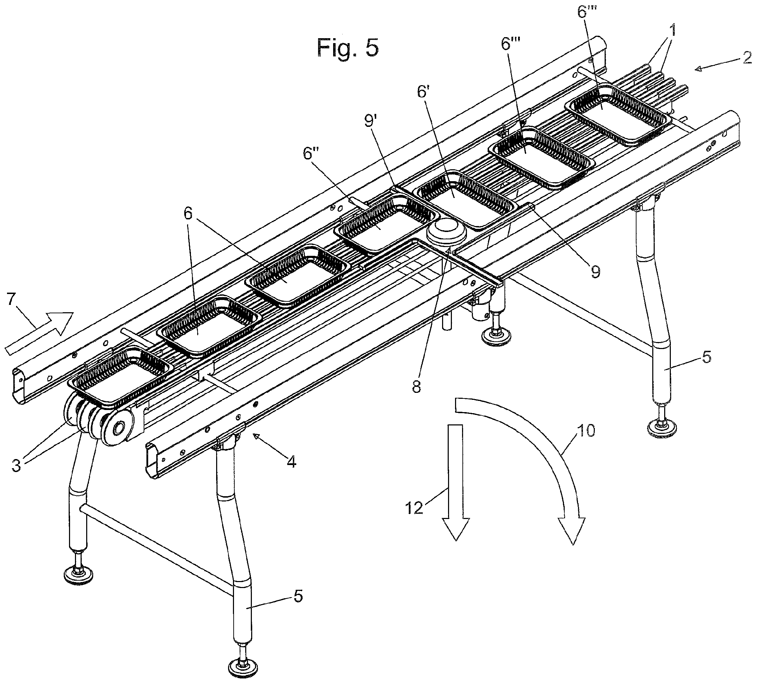

Figuren 3 und 4 zeigen, dass die teilweise angehobene Schale 6' weiter gedreht wird bis die in Figur 5 gezeigte Endposition der Schale 6' erreicht ist. In dieser Position wird das Speichenrad 8 entlang Pfeil 12 wieder abgesenkt. Eine nächste Schale 6" ist nun an der Speiche 9 angekommen, der Drehprozess wiederholt sich. Die gedrehte Schale 6' wird dagegen wie bereits zuvor gedrehte Schalen 6''' mit dem Förderband 2 entlang Pfeil 7 abtransportiert.

Figur 6 zeigt die Schale 6' im Ausgangspunkt der Drehbewegung. Die Schale 6' liegt an den Speichen 9, 9' an.

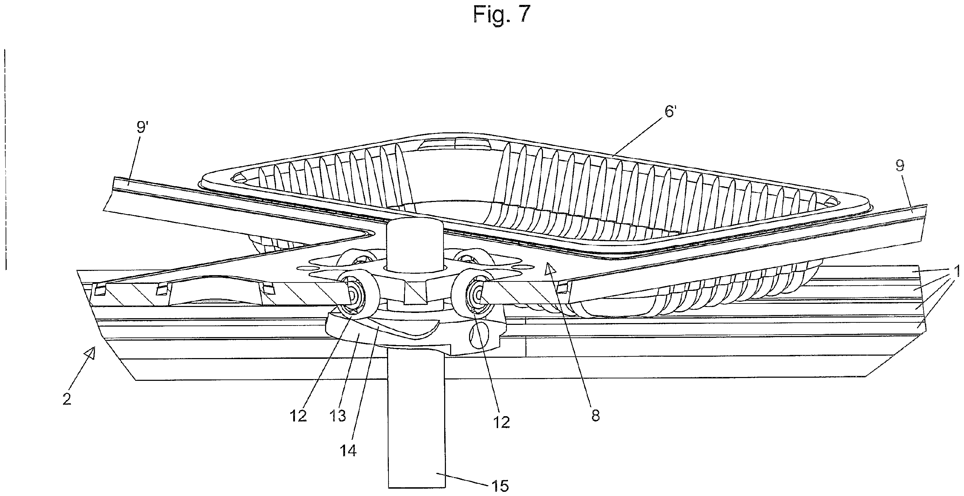

Das Speichenrad 8 steht über Räder 12 auf einem Teller 13 auf. In den Teller 13 sind Rampen 14 eingearbeitet. In Figur 6 ist das Rad 12 im Rampental angeordnet, in Figur 7 sind Räder 12 dagegen über die Rampe auf einen Rampenberg gefahren. Dieses Verfahren erfolgt bei einer Verdrehung des Speichenrades 8 durch Anliegen der Schale 6' an den Speichen 9, 9'. Ein Antrieb für das Speichenrad 8 ist somit nicht notwendig, die Antriebskräfte resultieren aus dem Förderband 2.

Der Teller 13 ist mit Gestellelementen 15 am Maschinengestell 4 angeordnet.

Figur 7 zeigt, dass vier Räder 12 vorgesehen sind, damit auch vier Rampenabschnitte 14. Jeder Speiche 9, 9' ist ein Rad 12 zugeordnet.

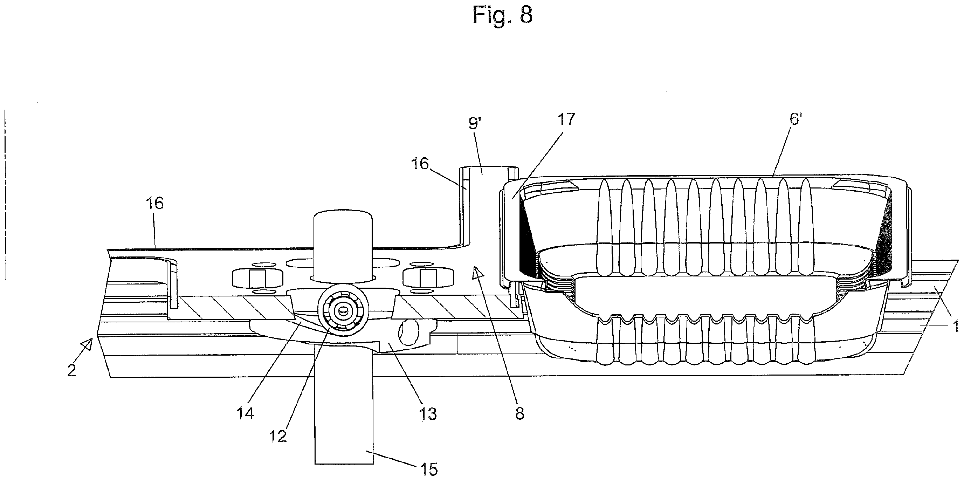

Figur 8 zeigt den Abschluss des Verdrehvorgangs für die Schale 6'. Das Rad 12 ist wieder im Talbereich des Rampenabschnitts 14 angekommen.

Aus Figur 8 sind noch Lippen 16 zu erkennen, die entlang der Ränder der Speichen 9, 9' verlaufen. Sie bilden einen Vorsprung aus, der von einem Rand 17 der Schale 6' übergriffen wird. Dadurch wir ein formschlüssiges Halten der Schale 6' bei ihrem Teilanheben ermöglicht.

## Patentansprüche

1. Vorrichtung zum Drehen von auf einem Förderer (1, 2) aufstehenden Behältern (6, 6', 6", 6"') um eine vertikale Achse, umfassend ein Speichenrad (8) mit an zumindest einen Behälter anlegbaren Anlageelementen, wobei die Anlageelemente Arme des offenen Speichenrades (8) sind, das auf einer vertikalen Achse dem Förderer (1, 2) zugeordnet werden kann,
**dadurch gekennzeichnet,**
**dass** die Vorrichtung eine seine Höhenlage bei einer Drehung des Speichenrades (8) abschnittsweise erhöhende Drehaufnahme hat, wobei die Drehaufnahme Rampenabschnitte (14) hat und das Speichenrad (8) in seinem Nabenbereich auf die Rampenabschnitte (14) aufstellbare Rollelemente aufweist.

2. Vorrichtung nach Anspruch 1, **dadurch gekennzeichnet, dass** einander benachbarte Speichen (9, 9') des Speichenrades (8) rechtwinklig zueinander ausgerichtet sind.

3. Vorrichtung nach Anspruch 1 oder 2, **dadurch gekennzeichnet, dass** die Speichen (9, 9') des Speichenrades (8) eine die Behälterkantenlänge überragende Baulänge aufweisen.

4. Vorrichtung nach einem der vorhergehenden Ansprüche, **dadurch gekennzeichnet, dass** die Rollelemente Räder (12) sind.

5. Vorrichtung nach einem der vorhergehenden Ansprüche, **dadurch gekennzeichnet, dass** die Drehaufnahme einen Teller (13) hat, in den die Rampen (14) eingearbeitet sind.

6. Vorrichtung nach Anspruch 5, **dadurch gekennzeichnet, dass** der Teller (13) mit Gestellelementen (15) an Bauteilen des Förderers gehalten ist.

7. Vorrichtung nach einem der vorhergehenden Ansprüche, **dadurch gekennzeichnet, dass** an den Speichen (9, 9') des Speichenrades (8) entlang der jeweiligen Speichenränder Lippen (16) angeordnet sind.

8. Vorrichtung nach Anspruch 7, **dadurch gekennzeichnet, dass** die Lippen (16) zumindest abschnittsweise aus einem elastischen Material gefertigt sind.

## Claims

1. A device for rotating containers (6, 6', 6", 6""") standing on a conveyor (1, 2) about a vertical axis, comprising a spoked wheel (8) having bearing elements which can be placed onto at least one container, wherein the contact elements are arms of the open spoked wheel (8), which can be assigned to the conveyor (1, 2) on a vertical axis,
**characterized**
**in that** the device has a rotary mount, which increases the elevation thereof in sections during a rotation of the spoked wheel (8), wherein the rotary mount has ramp sections (14) and the spoked wheel (8) has rolling elements in the hub region thereof, which can be placed onto the ramp sections (14).

2. The device according to Claim 1, **characterized in that** mutually adjacent spokes (9, 9') of the spoked wheel (8) are aligned at right angles to one another.

3. The device according to Claim 1 or 2, **characterized in that** the spokes (9, 9') of the spoked wheel (8) have an overall length protruding beyond the container edge length.

4. The device according to one of the preceding claims, **characterized in that** the rolling elements are wheels (12) .

5. The device according to one of the preceding claims, **characterized in that** the rotary mount has a plate (13), into which the ramps (14) are incorporated.

6. The device according to Claim 5, **characterized in that** the plate (13) is held on components of the conveyor using frame elements (15).

7. The device according to one of the preceding claims, **characterized in that** lips (16) are arranged on the spokes (9, 9') of the spoked wheel (8) along the respective spoke edges.

8. The device according to Claim 7, **characterized in that** the lips (16) are manufactured from an elastic material, at least in certain sections.

## Revendications

1. Dispositif, destiné à faire tourner autour d'un axe vertical des contenants (6, 6', 6", 6''') placés debout sur un convoyeur (1, 2), comprenant une roue à rayons (8) pourvue d'éléments d'appui, susceptibles de s'appuyer sur au moins un contenant,
les éléments d'appui étant des bras de la roue à rayons (8) ouverte, qui sur un axe vertical, peut être associée au convoyeur (1, 2),
**caractérisé en ce que**
le dispositif dispose d'un logement rotatif, élevant par endroits sa position en hauteur lors d'une rotation de la roue à rayons (8), le logement rotatif disposant de segments de rampe (14) et dans la zone de son moyeu, la roue à rayons (8) comportant des éléments de roulement susceptibles de se poser sur les segments de rampe (14) t.

2. Dispositif selon la revendication 1, **caractérisé en ce que** des rayons (9, 9') mutuellement voisins de la roue à rayons (8) sont orientés à angle droit les uns par rapport aux autres.

3. Dispositif selon la revendication 1 ou 2, **caractérisé en ce que** les rayons (9, 9') de la roue à rayons (8) présentent une longueur hors tout saillant par-dessus la longueur d'arête des contenants.

4. Dispositif selon l'une quelconque des revendications précédentes, **caractérisé en ce que** les éléments de roulement sont des roues (12).

5. Dispositif selon l'une quelconque des revendications précédentes, **caractérisé en ce que** le logement rotatif dispose d'un disque (13) dans lequel sont incorporées les rampes (14).

6. Dispositif selon la revendication 5, **caractérisé en ce que** le disque (13) est maintenu par des éléments de châssis (15) sur des éléments constitutifs du convoyeur.

7. Dispositif selon l'une quelconque des revendications précédentes, **caractérisé en ce que** sur les rayons (9, 9') de la roue à rayons (8), des lèvres (16) sont placées le long des bords respectifs des rayons.

8. Dispositif selon la revendication 7, **caractérisé en ce que** les lèvres (16) sont fabriquées au moins par endroits en une matière élastique.
